**Europäisches Patentamt**

**European Patent Office**

**Office européen des brevets**

(19)

(11) veröffentlichungsnummer: **0 016 364**

**A1**

(12) EUROPÄISCHE PATENTANMELDUNG

(21) Anmeldenummer: 80101042.2

(22) Anmeldetag: 03.03.80

(51) Int. Cl.³: **B 29 H 17/00**
B 29 F 1/00

(30) Priorität: 13.03.79 DE 2909741

(43) Veröffentlichungstag der Anmeldung:
01.10.80 Patentblatt 80/20

(84) Benannte Vertragsstaaten:
DE FR GB IT

(71) Anmelder: BAYER AG
Zentralbereich Patente, Marken und Lizenzen
D-5090 Leverkusen 1, Bayerwerk(DE)

(72) Erfinder: Boden, Heinrich
Sperberweg 14
D-5090 Leverkusen 3(DE)

(72) Erfinder: Just, Gerhard
Finkenweg 2
D-5653 Leichlingen(DE)

(72) Erfinder: Knipp, Ulrich, Dr.
Haberlandstrasse 3
D-5060 Bergisch-Gladbach 2(DE)

(54) Formveränderlicher Balg und Verfahren zu seiner Entnahme aus geformtem reifenförmigen Gebilde.

(57) Ein zum Mittelpunkt offener Balg (1) aus elastischem
Material ist in der Balgmantelfläche so mit Durchbrüchen (41,
42) oder Vertiefungen (60,61) versehen, daß er durch beidseitigen axialen Zug an den Balgwülsten (2,18) nach außen
näherungsweise zu einem Zylinder verformt werden kann.
Dabei nimmt der Außendurchmesser des Balges fast auf den
Wulstdrahtdurchmesser ab. Ein solcher Balg ist geeignet als
Kern für gegossene, gespritzte oder geschleuderte Reifen; er
ist nach der Kernentformung wieder verwendbar.

FIG. 3

EP 0 016 364 A1

Croydon Printing Company Ltd.

0016364

- 1 -

BAYER AKTIENGESELLSCHAFT    5090 Leverkusen,Bayerwerk

Zentralbereich    Hö/bc
Patente, Marken und Lizenzen

BEZEICHNUNG GEÄNDERT
siehe Titelseite

<u>Im Durchmesser veränderlicher Balg für die Reifenformung</u>

Die Erfindung betrifft einen reifenförmigen, zum Mittelpunkt offenen, formstabilen, mit Wülsten versehenen Balg aus elastischem Material, bei dem sich durch beidseitigen axialen  Zug der Durchmesser verkleinert. Die Erfindung betrifft außerdem ein Verfahren zur Herstellung von gegossenen, spritzgegossenen oder geschleuderten reifenförmigen zur Reifenmitte offenen Gebilden aus Mehrkomponentenreaktionswerkstoffen, bei dem  der erfindungsgemäße Balg als Reifenkern verwendet wird und wodurch eine einfache zerstörungsfreie Kernentformung möglich ist.

Die Herstellung von Hohlkörpern mit Hinterschneidungen - ein typisches Beispiel ist ein Fahrzeugreifen - ist erschwert durch die Kernentformung. Ein metallischer Formkern muß zur Kernentformung geteilt werden können. Ein

<u>Le A 19 426</u>

solcher Kern ist aufwendig. Es treten zusätzlich Abdicht- und Temperierprobleme auf. Man hat auch sogenannte Verlustkerne eingesetzt; sie bestehen meist aus Schaumstoff und werden nach der Formgebung zerteilt. Schaumstoff hält oft den auftretenden hohen Preßdrücken nicht stand. Bekannt sind auch aus formänderbarem, elastischem Material bestehende Hohlkörper, die mit niedrigschmelzenden Substanzen gefüllt sind. Auch diese Verfahren sind sehr aufwendig. Nachteilig ist zudem die kurze Standzeit.

Mit Preßluft oder Dampf beaufschlagte dünnwandige, weiche Bälge können nur beim Schleuderverfahren benutzt werden, weil bei stehendem Formwerkzeug der Auftrieb zu Druckschwankungen und Verschieben des Balges in der Form führt. Auch bei einem anderen bekannten Verfahren, bei dem nach Einsetzen eines nachgiebigen Balges in die Fußform und Füllen des Balges mit einer Flüssigkeit, die in ihrer Dichte an die Dichte der den Formartikel (Gegenstand) bildenden Reaktionsmischung angeglichen ist, der Spaltraum zwischen Kern und Form mit einem härtbaren flüssigen Material, aus dem der Gegenstand bestehen soll, gefüllt wird, worauf die Form mit dem Balg zur Rotation gebracht werden, um den Gegenstand aus dem härtbaren flüssigen Material durch Fliekraft zu formen, wobei die auf die beiden Seiten des Balges einwirkenden Kräfte miteinander ausgeglichen werden, so daß während des Schleudervorganges keine Verformung des Balges auftritt, ist auf das Schleuderverfahren beschränkt, weil sonst die Hohlräume innerhalb des Balges nicht einwandfrei mit Flüssigkeit gleicher Dichte gefüllt werden können. Außerdem können hierbei Änderungen der Dichte der Reaktionsmasse während der Reaktion und Schwindungserscheinungen Ungleichförmigkeiten in Dicke und Rotationssymmetrie der Formteile verursachen. Außerdem bereitet das Einbringen und Austragen der Füllflüssigkeit für den Balg Schwierigkeiten in Abdichtung, Lagerung und Temperierung; außerdem sind zusätzliche Vorrichtungen erforderlich. Die Fixierung eines Verstärkungsgürtels für Reifen ist schwierig. Bei einem anderen bekannten Verfahren wird ein als Formkern dienender elastischer Balg mit rieselfähigen Partikeln gefüllt, geformt und in der Gießform fixiert; zur Kernentformung werden die Partikel aus dem Balg entfernt und der Balg herausgezogen. Bei diesem Verfahren ist die Handhabung der Füllstoffpartikel beim Entformen aufwendig.

Aufgabe der Erfindung ist ein Balg, mit dem die Kernentformung eines Hohlkörpers mit Hinterschneidungen verbessert wird; insbesondere ist es eine Aufgabe der Erfindung, die Kernentformung bei der Reifenherstellung wirtschaftlicher zu gestalten.

Diese Aufgabe wird von einem ringförmigen zum Mittelpunkt offenen, formstabilen, mit Wülsten versehenen Balg aus elastischem Material erfüllt, der dadurch gekennzeichnet ist, daß in der Balgmantelfläche Durchbrüche oder Vertiefungen vorhanden sind, wobei die Form der Durchbrüche oder Vertiefungen so gewählt ist, daß durch beidseitigen axialen Zug an den Balgwülsten nach außen eine näherungsweise zylindrische Balgmantelfläche gebildet wird. Verfahrensmäßig wird die Aufgabe dadurch gelöst, daß beidseitig axial nach außen an den Wülsten des als Reifenkern dienenden, zum Kernmittelpunkt offenen, formstabilen Balges aus elastischem Material mit Durchbrüchen oder

Le A 19 426

- 4 -

Vertiefungen in der Balgmantelfläche gezogen wird, und das reifenförmige Gebilde über den in seinem Durchmesser verkleinerten Kern gezogen wird.

Der erfindungsgemäße Balg hat den Vorteil, daß durch axialen Zug an den Balgwülsten nach außen sein Durchmesser kleiner wird. Durch den Zug entsteht aus dem reifenförmigen Balg näherungsweise ein tonnenförmiger oder zylindrischer Körper. Diese Formänderung geht im wesentlichen ohne plastische Verformung vor sich; sie wird durch eine elastische Verformung der Balgmantelfläche erreicht, wenn geeignete Durchbrüche oder Vertiefungen an der Balgmantelfläche vorhanden sind. Der erfindungsgemäße Balg muß formstabil sein, d.h. wenn kein axialer Zug anliegt, nimmt er seine alte reifenförmige Form wieder an. Bei geeigneter Materialauswahl hat sich gezeigt, daß die elastische Verformung des Balges beliebig oft möglich ist. Das erfindungsgemäße Verfahren bei der Reifenkernentformung ist durch die Schnelligkeit und ausreichende Genauigkeit sehr wirtschaftlich.

Während des Einfüllprozesses bei der Reifenherstellung ist der Balg, wenn er Durchbrüchen in der Mantelfläche hat, mit außen fest anliegender Dichthülle in der Form fixiert. Ist der Balg nur mit Vertiefungen in der Balgmantelfläche ausgeführt, so kann auf eine festanliegende Dichtehülle verzichtet werden. Er kann sowohl aus der geschlossenen Außenform als auch in einer getrennten Vorrichtung aus dem Inneren eines außen schon entformten Luftreifens entfernt werden.

Le A 19 426

Die inneren Verrippungen des Balges sind zur Erhöhung der Stabilität sehr zweckmäßig. Sie können so ausgebildet sein, daß sie sich während der Reifenherstellung gegenseitig abstützen. Der Balg kann durch einen üblicherweise armierten Schlauch im Balgkern zusätzlich abgestützt sein; er liegt an den Spitzen der Verrippungen an und stabilisiert bei entsprechendem Innendruck den Balg in seiner Form. Bei der Herstellung von Reifen großer Dimensionen ist es besonders vorteilhaft, den Balg auf seiner Innenseite mit Rippen zu versetzten, welche sich gegenseitig abstützen. Darüber hinaus besteht die Möglichkeit, die Rippen so zu formen, daß sie sich auf einem im Balg angeordneten, armierten Luftschlauch abstützen können. Besonders für bei der Entformung stark deformierte Bälge, wofür nur sehr weiche oder sehr dünnwandige Elastomerbälge möglich sind, ist diese Verrippung zur exakten Dimensionshaltung der Außenkontur erforderlich.

Der Balg wird mit der gegebenenfalls um ihn angeordneten Dichthülle außerhalb der die Außenkontur des Luftreifens bildenden Form vorbereitet; dabei wird häufig auch kraft- und formschlüssig ein vorgefertigter Verstärkungsgürtel aufgebracht, der beim anschließenden Gießvorgang von der Reaktionsmischung durchdrungen wird und die innere Verstärkung eines Reifens bildet. Diese Verstärkungseinlagen unterstützen gleichzeitig die Dimensionsstabilität des Balges.

Wesentliche Vorteile des mit Durchbrüchen oder Vertiefungen an der Balgmantelfläche versehenen Balges sind das geringe Gewicht des Kerns, die geringe Wärmekapazität, was normalerweise keine Kerntemperierung erfor-

- 6 -

lich macht, die Vermeidung von Dichtproblemen, da durch die anliegende Hülle oder die geschlossene Mantelfläche kein flüssiges Medium in Kerninnere gelangt, die Dauergebrauchstüchtigkeit, da keine plastische Verformung auftritt und die Möglichkeit, den Balg auch in geschlossener Form zu entfernen, wobei der Luftreifen mechanisch kaum beansprucht wird und die Entformungszeit stark verkürzt wird.

Der Balg besteht aus bekannten Elastomeren, z.B. Kautschuk, Polyurethan und ist in vielen Fällen (glas)-faserverstärkt. Besonders geeignet sind Kautschukelastomere mit hoher Einreißfestigkeit, geringer bleibender Verformung im Härtebereich von 50-65 Shore A. Vorteilhaft sind Armierungen der Kautschukelastomeren mit Cord. Weiterhin haben sich gegebenenfalls auch nicht armierte Polyurethan-Elastomere im Härtebereich von 65-95, vorzugsweise von 85-90 Shore A bewährt. Bei der Herstellung von sehr großen Reifen aus Reaktionswerkstoffen, die hohe Verarbeitungstemperaturen erfordern, wirkt die Zugabe von Kurzglasfasern sehr günstig auf Reduzierung der Wärmeausdehnungskoeffizienten und Erhöhung der Wärmeformstabilität aus. Ein leichtes konzentrisches Wachsen des mit einem vorgefestigten Verstärkungsgürtel oder -Mantel für den zu bildenden Reifen außen umgebenen Balges kann in vorteilhafter Weise zur Eliminierung von Schrumpferscheinungen der den Reifen bildenden Reaktionsmasse genutzt werden. Dieses Wachsen des Balges kann durch Temperaturerhöhung der ihn umgebenden exotherm lagernden Reaktionsmasse bewirkt werden. Das Verfahren ist sehr flexibel.

Die Herstellung eines Balges beispielsweise aus PU-Elastomeren erfolgt üblicherweise im Schleudergießverfahren. Dabei wird die Außenkontur durch eine rotationssymmetrische, längsgeteilte Schale gebildet. Die Innenkontur kann durch einen Hartschaumkern gebildet werden, welcher zunächst in der Außenform gebildet wird. Er erhält seine, die Verrippungen des Balges bildenden Vertiefungen durch nachträgliche mechanische Bearbeitung.

Das Verfahren zur Kernentformung und der erfindungsgemäße reifenförmige Balg sind im folgenden weiter beispielhaft beschrieben und in der Zeichnung dargestellt. Es zeigen:

Fig. 1    Querschnitt durch einen Balg mit Rippen und Armierungsgürtel für einen Reifen;

Fig. 2    Querschnitt durch eine Reifenform mit eingesetztem Balg;

Fig. 3    formstabiler Balg mit Durchbrüchen;

Fig. 4    Balg nach Figur 3 in gestrecktem Zustand;

Fig. 5    zwei verschiedene Ausführungsformen der Durchbrüche in schematischer Darstellung;

Fig. 6    formstabiler Balg mit Vertiefungen (Ausschnitt);

Fig. 7    Balg nach Figur 6 in gestrecktem Zustand (Ausschnitt);

Fig. 8    Schnitt durch einen Balgausschnitt mit Vertiefungen nach Fig. 6 u. 7 bei unterschiedlicher Beanspruchung.

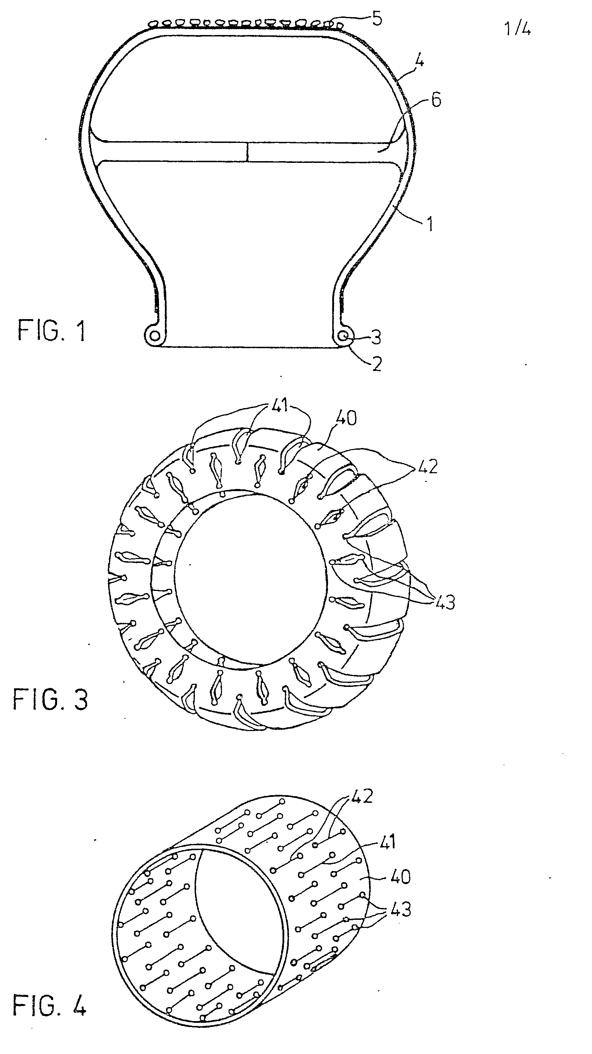

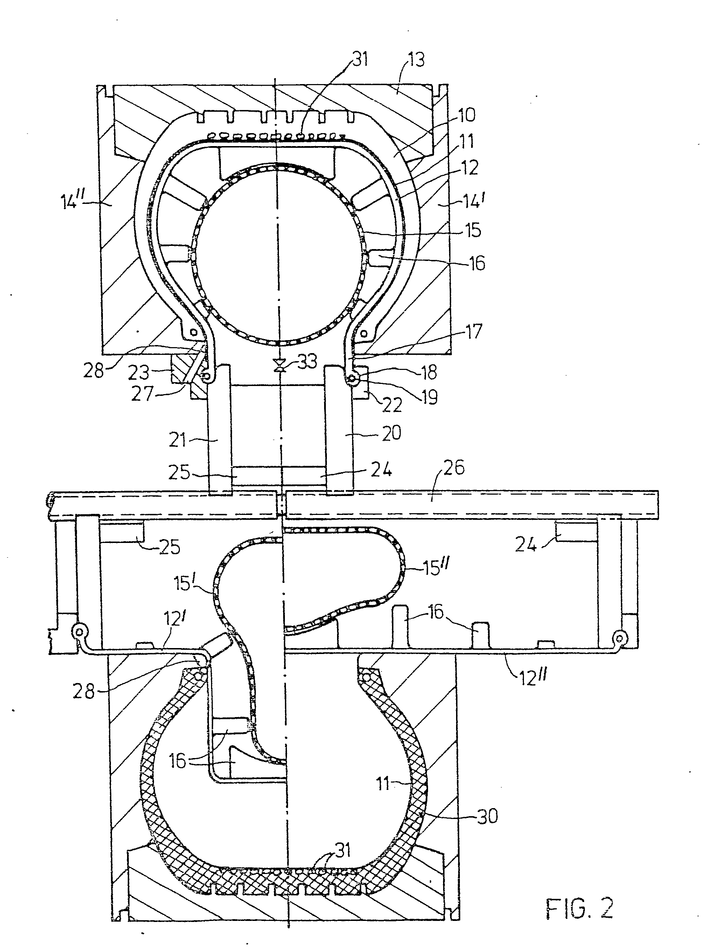

Fig. 1 zeigt einen Querschnitt durch einen reifenförmigen zum Mittelpunkt offenen, formstabilen Balg 1 aus elastischem Material. In den Wülsten 2 sind Wulstdrähte 3 eingearbeitet. Um den Balg 1 ist eine elastische geschlossene Dichthaut 4 und eine Gürtelarmierung 5 gelegt. Der Balg 1 ist durch innere Verrippungen 6 zusätzlich abgestützt.

Le A 19 426

Fig. 2 zeigt einen Querschnitt durch eine Schleuderform zur Herstellung von Reifen. Im oberen Teil ist der Balg in der Reifenform eingebaut, das Reifenmaterial aber noch nicht eingebracht. Im unteren Bereich sind 2 Stufen der Kernentformung dargestellt. Im rechten Teilbereich ist dabei der Kern ganz entfernt und der Reifen kann über den Kern geschoben werden. Der Formhohlraum 10 für den herzustellenden Reifen wird begrenzt nach innen von der Dichthaut 11, die auf dem Balg 12 anliegt, nach außen von den Werkzeugteilen 13,14' und 14". In diesem Beispiel ist dargestellt, daß der Balg 12 durch einen armierten druckbeaufschlagten Schlauch 15 über Rippen 16 zusätzlich stabilisiert ist. Im Fußbereich 17 liegt die Dichthaut 11 direkt an dem Formwerkzeug 14' und 14" an. Der Balgwulst 18 enthält einen Wulstdraht 19. Der Balg wird durch die Teller 20,21 und die Ringe 22,23 eingespannt. Distanzringe 24,25 bestimmen den Mindestabstand der Teller 20,21 zueinander. Die Teller sind im Eingriff mit der Gewindespindel 26, die zum auseinander- und zusammenfahren der Teller 20,21 dient und deshalb in der Mitte geteilt mit Rechts- und Linksgewinde versehen ist. Die Reifenform ist in diesem Beispiel als Schleuderform ausgeführt. Die für die Herstellung eines Reifens erforderliche flüssige Reaktionsmasse wird über die Angußkanäle 27,28 in den Formenhohlraum 10 der rotierenden Schleudervorrichtung eingetragen.

Im unteren Teil der Fig. 2 ist die Kernentformung in zwei verschiedenen Stadien dargestellt. In den Formenhohlraum 10 ist der Reifen 30 mit einer Armierungseinlage 31 entstanden. Mit Hilfe der aus den Positionen 20 bis 27 bestehenden Zentrier- und Entformungsvorrichtung wird der Balg aus dem Reifenkörper 30 herausgezogen. In diesem Beispiel geschieht das bei noch geschlossener Außenform.

Le A 19 426

- 9 -

Der Balg kann aber auch dann entnommen werden, wenn der Reifen nicht mehr in der Außenform liegt. Im linken unteren Teil der Fig. 2 ist der Balg 12', etwa zur Hälfte im rechten unteren Teil ist der Balg 12" ganz aus dem Reifen herausgezogen worden. Vor Beginn des Entformungsvorganges wird der Schlauch 15 durch Öffnen des Ventils 33 drucklos gemacht. Um den Balg 12 vor mechanischen Schädigungen zu schützen, sind die Werkzeugteile 14' und 14" und die Teller 20,21 abgerundet.

Fig. 3 stellt perspektivisch den formstabilen Balg 40 mit zwei Arten von Durchbrüchen 41,42 dar.

Durch axialen Zug an den Wülsten des Balges nach außen entsteht das in Fig. 4 dargestellte Gebilde,durch die Streckung sind die Durchbrüche 41,42 nahezu verschwunden. Der Balg 40 hat näherungsweise zylindrische Form angenommen. Der Durchmesser des Balges 40 hat sich reduziert. Es ist zweckmäßig, die Ecken 43 der Durchbrüche abzurunden.

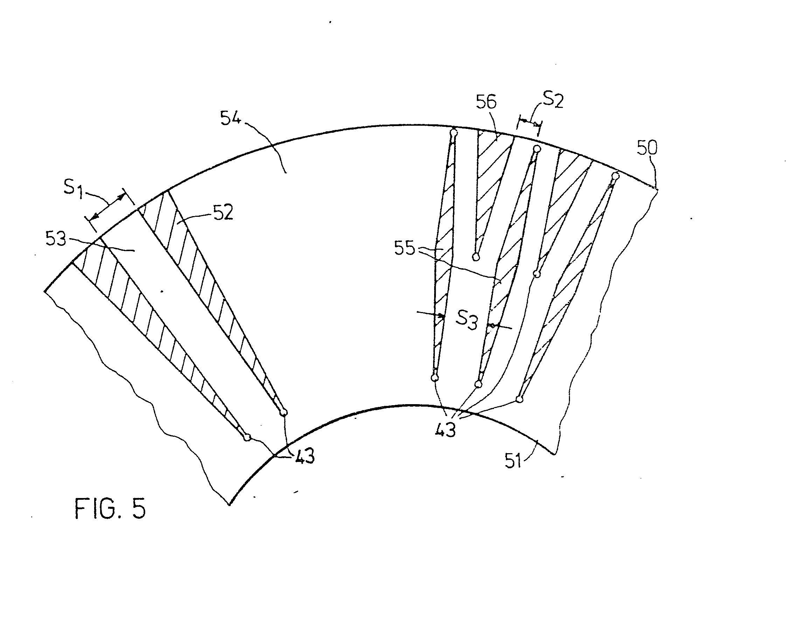

In Fig. 5 sind 2 mögliche Ausführungsformen der Durchbrüche in der Mantelfläche schematisch dargestellt. Die Linie 50 charakterisiert den Maximaldurchmesser des formstabilen Balges (nach Fig. 1 im unverstreckten Zustand). Die Linie 51 bezeichnet den Umfang des Balges 54 im Bereich der Außendurchmesser der Teller (20,21 in Fig. 2). Im linken Bereich sind die Durchbrüche 52 keilförmig. Die dazwischen verbleibenden Stege 53 sind rechteckig mit einer Breite $s_1$. Die Summe aller Stegbreiten $s_1$ über dem Umfang muß kleiner gleich dem geforderten Minimaldurchmesser des Balges 54 sein.

Le A 19 426

Werden beispielsweise die Durchbrüche 55,56 wie im rechten Bereich von ·Fig. 5 ausgeführt, so lassen sich ähnliche Beziehungen für die Stegbreiten des $s_2$ bzw. $s_3$ aufstellen, die Summe aller Stege der Breite $S_2$, muß ebenso wie die Summe aller Stege der Breite $S_3$ kleiner gleich dem geforderten Minimaldurchmesser des Balges 54 sein.

Betragen beispielsweise die Stegbreiten 53,5 mm und werden über den Balgumfang gleichmäßig verteilt 20 doppelkeilförmige Durchbrüche 52 angebracht (mit einer maximalen Breite von 47 mm), so kann der Umfang des Balges von 2010 mm im Normalzustand auf 1070 mm im gestreckten Zustand herabgesetzt werden.

Durch geeignete Wahl der Stegdicke, der Stegbreite und der Form der Durchbrüche lassen sich die Konturstabilität, Steifigkeit und Entformungsverhalten des Balges 54 in weiten Grenzen ändern. Als vorteilhaft hat sich der Auslauf der Durchbrüche in kreisförmigen Erweiterungen 43 erwiesen.

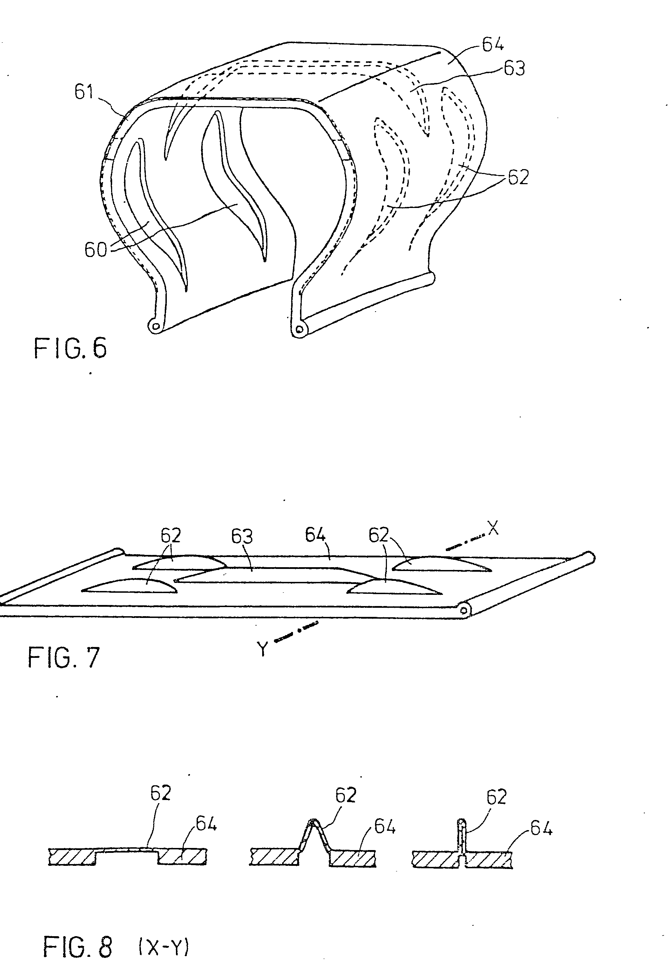

In den Figuren 6 bis 8 sind anstelle der in den Figuren 3 bis 5 dargestellten Durchbrüche Vertiefungen. Die Dichthaut (4 in Figur 1 bzw. 11 in Figur 2) kann bei dieser Ausbildung entfallen. Die Funktion und auch weitgehend auch die Form der Vertiefungen 60,61 kann weitgehend mit der Form der Durchbrüche 52, 55, 56 in Fig. 5 übereinstimmen. Die Haut 62,63 oberhalb der Vertiefungen 60,61 übernimmt hier die Dichtfunktion. Sie erlaubt aber die gewünschte Reduzierung des Umfangs bei der

- 11 -

Streckung. Während des Entformungsvorganges können die Häute 62,63 durch Überdruck innerhalb des Balges 64 nach außen gedrückt werden.

Fig. 7 zeigt einen Ausschnitt des Balges 64 nach Figur 6 in gestrecktem Zustand.

Fig. 8 ist ein Schnitt längs der Linie XX nach Fig. 7 im unverformten, mäßig verformten und maximal elastisch verformten Zustand.

Le A 19 426

Patentansprüche

1) Reifenförmiger, zum Mittelpunkt offener, formstabiler, mit Wülsten versehener Balg aus elastischem Material, dadurch gekennzeichnet, daß in der Balgmantelfläche (1,12,40,64) Durchbrüche (41,42) oder Vertiefungen (60,61) vorhanden sind, wobei die Form der Durchbrüche oder Vertiefungen so gewählt ist, daß durch beidseitigen axialen Zug an den Balgwülsten (2,18) nach außen eine näherungsweise zylindrische Balgmantelfläche gebildet wird.

2) Balg nach Anspruch 1, dadurch gekennzeichnet, daß im Balginneren Rippen (6,16) vorhanden sind, die sich gegenseitig oder an einem Schlauch (15) abstützen.

3) Verfahren zur Kernentformung von gegossenen, gespritzten oder geschleuderten reifenförmigen, zur Reifemitte offenen Gebilden aus Mehrkomponentenreaktionswerkstoffen, dadurch gekennzeichnet, daß noch in der Reifenform (13,14) oder nach Entnahme des reifenförmigen Gebildes (30) mit dem Kern (12) aus der Form beidseitig axial nach außen an den Wülsten (18) des als Reifenkern dienenden zum Kernmittelpunkt offenen formstabilen Balges (12) aus elastischem Material mit Durchbrüchen (41,42) oder Vertiefungen (60,61) in der Balmantelfläche gezogen wird, und das reifenförmige Gebilde über den in seinem Durchmesser verkleinerten Kern geschoben wird.

Le A 19 426

FIG. 1

FIG. 3

FIG. 4

FIG. 2

FIG. 5

FIG. 6

FIG. 7

FIG. 8 (X-Y)

**⁻ 016364**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 437 888 (BRIDGESTONE) <br> * Seite 9, Absatz 4 - Seite 10; Figuren 3a,b,c * <br><br> -- | 3 |
| A | DE - A - 2 228 610 (BRIDGESTONE) | 1 |
| A | DE - B - 2 007 862 (FIRESTONE) | 1 |
| A | GB - A - 938 797 (MACBETH PATENTS) <br><br> ---- | 1 |

**KLASSIFIKATION DER ANMELDUNG (Int.Cl ³)**

B 29 H 17/00
B 29 F 1/00

**RECHERCHIERTE SACHGEBIETE (Int. Cl ³)**

B 29 H
B 29 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-06-1980 | DECLERCK |

EPA form 1503.1 06.78